# EUROPÄISCHE PATENTANMELDUNG

(11) **EP 2 355 007 A2**
(43) Veröffentlichungstag der Anmeldung: **10.08.2011**
(21) Anmeldenummer: 11150658.0
(22) Anmeldetag: 11.01.2011
(51) Int. Cl.: G06K 9/20, G07C 9/00

(54) **System und Verfahren zur dreidimensionalen Objektvermessung**

(30) Priorität: 13.01.2010 DE 102010004469
(71) Anmelder: Siemens IT Solutions and Services GmbH, 81739 München (DE)
(72) Erfinder: Birchbauer, Josef Alois, 8054, Seiersberg (AT); Hatzl, Jürgen, 7423, Grafenschachen (AT); Marius, Wolfgang, 8043, Graz (AT); Schneider, Wolfgang, 8010, Graz (AT); Windisch, Claudia, 8565, St. Johann (AT)
(74) Vertreter: Patentanwaltskanzlei WILHELM & BECK

(57) **Zusammenfassung**

Die vorliegende Erfindung betrifft ein System (SYS) sowie ein zugehöriges Verfahren zur dreidimensionalen Objektvermessung, insbesondere zum Vermessen von Gesichtern. Das System (SYS) besteht ein Aufnahmesystem zum Erfassen von Objekten (01, 02, 03, 04), welches zumindest eine Überblickskamera (UK), eine Detailkamera (DK) und ein verstellbares oder schwenkbares Spiegelelement (SP) umfasst, sowie ein Sensorsystem (SE) zur dreidimensionalen Lichtvermessung. Dabei wird nach Registrieren und Detektieren von Objekten (01, 02, 03, 04) durch die Überblickskamera (UK) des Aufnahmesystems das Spiegelelement (SP) derart verstellt oder geschwenkt (1, 2), dass über einen Spiegel des Spiegelelements (SP) von der Detailkamera (DK) ein Detailbild eines detektierten Objektes (01) und mit dem Sensorsystem (SE) zur dreidimensionalen Lichtvermessung zusätzlich selektiv ein dreidimensionaler Abdruck des detektierten Objektes (01) erfasst wird (3, 4). Mit dem erfindungsgemäßen System (SYS) und dem zugehörigen Verfahren können auf einfache Weise und mit kurzer Erfassungszeit Fälschungen wie z.B. Fotos von Objekten (01, 02, 03, 04), insbesondere Personen, erkannt werden. Da die Daten für den dreidimensionalen Abdruck nur selektiv aufgenommen werden, reicht vorteilhafter Weise eine kleine Auflösung für die dreidimensionale Objektvermessung und damit eine kürzere Erfassungszeit.

## Beschreibung

### Beschreibung

System und Verfahren zur dreidimensionalen Objektvermessung

### Technisches Gebiet

Die vorliegende Erfindung bezieht sich allgemein auf das Gebiet der biometrischen Erkennungssysteme und -methoden. Insbesondere betrifft die vorliegende Erfindung ein System zur dreidimensionalen Objektvermessung, wobei insbesondere Personen bzw. deren Gesichter für eine Lebenderkennung z.B. bei biometrischen Zugangssystem vermessen werden. Weiters bezieht sich die Erfindung auf ein Verfahren zum dreidimensionalen Vermessen von Objekten, insbesondere Personen bzw. deren Gesichtern mit dem erfindungsgemäßen System.

### Stand der Technik

Sogenannte biometrische Erkennungssysteme und -methoden haben in den letzten Jahren einen enormen Aufschwung erlebt. Durch den technologischen Fortschritt beispielsweise im Bereich der Sensorik bzw. bei Kameras und/oder im Bereich der Datenverarbeitung ist im zunehmenden Maße eine raschere Messung biologischer Charakteristika von Personen (z.B. Fingerabdruck, Iris, Gesichtsmerkmale, etc.) und deren Auswertung mit vertretbarem Aufwand und hoher Qualität ermöglicht worden. Von der Biometrie, welche sich mit Messungen von Charakteristika von Lebewesen sowie den dazu erforderlichen Mess- und Auswerteverfahren beschäftigt, wird damit ein vielversprechender Ansatz für neuartige Sicherheitskonzepte und Sicherheitssystem geliefert.

Durch den Einsatz der Biometrie wird eine Verbindung zwischen Identitäten und den zugehörigen Rechten mit den richtigen physischen Personen ermöglicht. Daher werden biometrische Erkennungssysteme und -methoden beispielsweise bei Zugangssystemen und/oder -kontrollen eingesetzt. Bei derartigen biometrischen Anwendungen kommt es darauf an, individuelle biometrische Verhaltens- und Körpercharakteristika zu finden, die sich u.a. durch Messbarkeit, Universalität, Einmaligkeit und Konstanz auszeichnen. Derartige Charakteristika sind beispielsweise Fingerabdrücke, die Iris des Auges, Gesichtsgeometrie, etc.

Die wichtigsten Erkennungsarten bei z.B. biometrischen Zugangssystemen sind je nach Einsatz des Zugangssystems die Verifikation und die Identifikation. Bei der Verifikation werden von der zu verifizierenden Person zuerst Name oder Nutzerdaten mitgeteilt. Danach wird vom biometrischen System entschieden, ob die Person zum zugehörigen Referenzmerkmalsdatensatz gehört. Bei der Identifikation geht es darum, die zu erkennende Person ausschließlich anhand biometrischer Charakteristika, welche die Person dem System offenbart, zu erkennen. Vom System wird dann daraus beispielsweise durch Vergleich mit Referenzmerkmalsdatensätzen die Identität (z.B. Name, Nutzerdaten, etc.) dieser Person ermittelt.

Ein Einsatzbereich der Identifikation sind beispielsweise unüberwachte, biometrische Zugangssysteme. Dabei wird häufig als biometrische Erkennungsmethode die sogenannte Gesichtserkennung oder die sogenannte Gesichtsvermessung verwendet, durch welche eine natürliche Person anhand ihrer Gesichtsgeometrie identifiziert werden soll. Bei der Gesichtserkennung bzw. bei der Gesichtsvermessung werden Ausprägungen sichtbarer Merkmale im Bereich des frontalen Kopfes einer Person, welche durch geometrische Anordnung und Textureigenschaften der Oberfläche gegeben sind, analysiert bzw. vermessen und zur Identifikation der jeweiligen Person im Zugangssystem herangezogen.

Bei einfachen Gesichtserkennungsverfahren - wie sie heute z.B. bereits im Einsatz sind - wird eine zweidimensionale geometrische Vermessung besonderer Merkmale (z.B. Augen, Nase, Mund, etc.) verwendet und dabei Position, Abstand und Lage dieser Merkmale zueinander bestimmt. Dabei wird üblicherweise mit einer Foto- oder Videokamera ein zweidimensionales Frontalbild einer zu identifizierenden Person erfasst, das Gesicht computergestützt herausgefiltert und ausgewertet. Die zweidimensionale Gesichtserkennung weist daher insbesondere bei unüberwachten Zugangssystemen den Nachteil auf, dass diese mit relativ einfachen Mitteln (z.B. durch Vorhalten eines Fotos oder Abspielen eines Videos einer berechtigten Person, etc.) umgangen werden kann. Daher spielt die sogenannte Lebenderkennung von Personen bzw. Gesichtern bei derartigen Zugangssystemen eine entscheidende Rolle, um dieses Sicherheitsrisiko auszuschließen.

Eine Möglichkeit der Lebenderkennung von Gesichtern kann beispielsweise durch Feststellen von Veränderungen in Videoströmen (z.B. Blinzeln, Änderungen in der Kopfhaltung oder Gesichtsmuskelanspannung, Änderungen der Mimik, etc.) erfolgen. Diese Verfahren besitzen allerdings den Nachteil, dass mehrere Aufnahmen der zu identifizierenden Person benötigt werden. Dadurch wird aber eine zeitverzögerte Auslösung beim Zugangssystem bewirkt und damit eine rasche Gesichtserkennung bzw. eine Identifikation von Personen quasi im Vorbeigehen oder bei schnellem Schritt - wie z.B. einer Überwachung von öffentlichen Plätzen, von Eingangsbereichen, etc. - ausgeschlossen.

Eine weitere Möglichkeit einer Gesichtserkennung/-vermessung mit Lebenderkennung stellt eine Anwendung von zusätzlicher oder alternativer Sensorik dar. Eine dieser Möglichkeiten stellt die sogenannte dreidimensionale Gesichtserkennung/- vermessung dar, welche beispielsweise in der Schrift "Busch, Ch., Nouak, A.: "Das EU-Projekt "3D-Face". 3-Gesichtserkennung für die unbeaufsichtigte Grenzkontrolle" - Beitrag zum 10. Deutschen IT-Sicherheitskongress des Bundesamtes für Sicherheit in der Informationstechnik, Februar 2007, beschrieben wird. In der angeführten Schrift wird ein Verfahren zur dreidimensionalen Gesichtserkennung/-vermessung offenbart, bei welchem mit Hilfe von z.B. sogenannten Stereo-Visionsystemen oder Multi-Kamera-Systemen ein Satz von zweidimensionalen Bildern erzeugt wird. Aus diesem Satz von Bildern wird dann beispielsweise nach dem Triangulationsprinzip eine Tiefeninformation errechnet, aus welcher eine dreidimensionale Kopie eines Kopfes abgeleitet werden kann.

Alternativ kann auch ein Aufnahmesystem eingesetzt werden, das aus einer aktiven Komponente mittels Projektion farbiger Streifen oder strukturierter Muster auf das Gesicht und einem oder mehreren Sensoren besteht. Dabei wird dann die dreidimensionale Gesichtserkennung mit Hilfe einer sogenannten Streifen- oder Musterprojektion durchgeführt, bei welcher ein projiziertes Muster unter einem bekannten Blickwinkel zur Projektion von Kameras registriert, mit jeder Kamera ein Bild aufgenommen und dann aus einer zeitlichen Folge von unterschiedlichen Helligkeitswerten der mit den Kameras aufgenommenen Bildpunkte ein dreidimensionales Bild ermittelt wird.

Mit Hilfe dieser Methoden können zwar plastische Kopien eines Menschenkopfes erzeugt werden. Allerdings sind diese Methoden wesentlich in der Auswertung relativ aufwändig und teilweise zeitintensiv. Außerdem müssen dabei auch komplexe und oft kostenintensive Kamera- und/oder Sensorsysteme eingesetzt werden, um eine entsprechende Qualität für eine fälschungssichere Identifikation von Personen zu erzielen.

### Darstellung der Erfindung

Der Erfindung liegt daher die Aufgabe zugrunde, ein System sowie ein zugehöriges Verfahren zum dreidimensionalen Vermessen von Objekten anzugeben, mit welchen auf einfache und kostengünstige Weise eine rasche und fälschungssichere Identifikation von Objekten, insbesondere Personen bzw. deren Gesichter, ermöglicht wird.

Die Lösung dieser Aufgabe erfolgt durch ein System der eingangs angegebenen Art, wobei ein Aufnahmesystem zum Erfassen von Objekten, insbesondere von Personen bzw. deren Gesichtern, welches zumindest ein Überblickskamera, eine Detailkamera und ein verstellbares oder schwenkbares Spiegelelement umfasst, und ein Sensorsystem zur dreidimensionalen Lichtvermessung vorgesehen sind. Dabei wird nach einem Detektieren von Objekten (wie z.B. Personen bzw. Gesichter von Personen) das Spiegelelement derart verstellt oder geschwenkt, dass über einen Spiegel des Spiegelelements von der Detailkamera ein Detailbild eines Objektes (z.B. Gesicht einer Person) und mit dem Sensorsystem zusätzlich selektiv ein dreidimensionaler Abdruck dieses Objektes erfasst wird.

Der Hauptaspekt der erfindungsgemäß vorgeschlagenen Lösung besteht darin, dass zuerst mit der Überblickskamera des Aufnahmesystems ein Objekt wie beispielsweise eine Person registriert wird und dann das Spiegelelement des Aufnahmesystems so abgelenkt wird, dass ein Detailbild des Objektes (z.B. Gesicht einer Person) sowohl von der Detailkamera als auch vom Sensorsystem für den dreidimensionalen Abdruck selektiv erfasst werden kann. Dabei wird der dreidimensionale Abdruck nur selektiv im Bereich des Detailbildes des Objektes - d.h. bei einer Person nur um den Bereich des Gesichtes ermittelt. Da auf diese Weise nicht für die gesamte Szene 3D-Daten erfasst werden müssen, sind die Anforderungen an die Auflösung der 3D-Daten relativ gering. Vom erfindungsgemäßen System wird daher auf einfache Weise, mit kurzer Erfassungszeit und ohne komplexe Kamera-/Sensorsysteme bzw. ohne komplexes Projektionsverfahren eine Fälschungserkennung ermöglicht. D.h. es können mit Hilfe des erfindungsgemäßen Systems beispielsweise gedruckte Falsifikate (z.B. Fotos) bei Zugangssystemen einfach und rasch ausgeschlossen werden.

Es ist weiterhin vorteilhaft, wenn das Detektieren von Objekten durch die Überblickskamera des Aufnahmesystems erfolgt und ein Verstellen oder Schwenken des Spiegelelements auslöst. Damit können ohne geringen Aufwand durch ein Ablenken des Spiegelelements Details eines Objektes wie z.B. das Gesicht einer Person für die dreidimensionale Vermessung herausgezoomt werden, wenn ein Objekt im Erfassungsbereich des Aufnahmesystems, insbesondere der Überblickskamera festgestellt wird.

Zur Lösung der Aufgabe ist vorteilhafter Weise außerdem vorgesehen, dass ein selektives Erfassen des dreidimensionalen Abdrucks des Objektes durch das Sensorsystem zur dreidimensionalen Lichtvermessung auf Basis von Lichtlaufzeiten durchgeführt wird. Bei einer dreidimensionalen Lichtvermessung auf Basis von Lichtlaufzeiten werden auf ein zu vermessendes Objekt beispielweise Lichtimpuls ausgesendet. Es wird dabei eine Zeitspanne gemessen, welche der jeweilige Lichtimpuls nach seiner Reflexion durch das zu vermessende Objekt bis zum Erfassen durch das Sensorsystem benötigt. Dadurch wird eine sogenannte Lichtlaufzeit - d.h. jene Zeitspanne, die der Lichtimpuls zum Durchlaufen einer bestimmten Strecke benötigt - ermittelt. Durch die unterschiedlichen Lichtlaufzeiten der jeweiligen Lichtimpulse, welche von der Objektstruktur abhängig sind, wird auf einfache und rasche Weise ein dreidimensionaler Abdruck des zu vermessenden Objekts (z.B. Gesicht) erhalten.

In weiterer Ausgestaltung des erfindungsgemäßen Systems ist auch vorgesehen, dass für eine Auswertung des Detailbildes und des dreidimensionalen Abdrucks des Objektes ein Auswerteeinheit vorgesehen ist. Durch den Einsatz einer beispielsweise computergestützten Auswerteeinheit kann rasch festgestellt werden, ob eine Fälschung, beispielsweise ein Foto, vorliegt und das Zugangssystem entsprechend angesteuert werden.

Die Lösung der angeführten Aufgabe erfolgt auch durch eine Verfahren zur dreidimensionalen Objektvermessung, welches von dem erfindungsgemäßen System durchgeführt wird. Dabei werden zuerst von einer Überblickskamera des Aufnahmesystems Objekte (z.B. Personen, Gesichter, etc.) detektiert und registriert. Dann wird das Spiegelelement des Aufnahmesystems derart verstellt oder geschwenkt, dass selektiv ein detektiertes Objekt bzw. ein Detail eines detektierten Objektes, insbesondere ein Gesicht einer detektierten Person als Detailbild von der Detailkamera des Aufnahmesystems erfasst wird. Zusätzlich wird unmittelbar danach oder parallel dazu selektiv ein dreidimensionaler Abdruck dieses Objektes aufgenommen.

Der Hauptaspekt des erfindungsgemäßen Verfahrens besteht darin, dass nachdem durch die Überblickskamera des Aufnahmesystems ein Objekt, insbesondere eine Person, erfasst worden ist, das Spiegelelement des Aufnahmesystems so eingestellt wird, dass ein Detailbild des Objektes (z.B. Gesicht einer Person) sowohl von der Detailkamera als auch vom Sensorsystem für den dreidimensionalen Abdruck selektiv erfasst werden kann. Durch das Sensorsystem wird dann der dreidimensionale Abdruck nur selektiv im Bereich des Detailbildes (z.B. nur um den Bereich des Gesichtes einer detektierten Person) ermittelt. Dadurch werden mit kurzer Erfassungszeit und ohne aufwendige Projektionsverfahren mit zeitintensiver Auswertung beispielsweise zweidimensionale Fälschungen - wie z.B. das Vorhalten eines Fotos bei einem unüberwachten, biometrischen Zugangssystem - erkannt. Zusätzlich sind die Anforderungen an die Auflösung der 3D-Daten geringer als bei einer detaillierten dreidimensionalen Gesichtserkennung.

Es ist auch vorteilhaft, wenn das erfasste Detailbild und der aufgenommene dreidimensionale Abdruck des Objektes an die Auswerteeinheit zur Auswertung weitergeleitet werden. Mit der Auswerteeinheit kann dann einfach und rasch das Detailbild und der aufgenommene dreidimensionale Abdruck ausgewertet werden. Auf Basis dieser Auswertung können dann auf einfache Weise Falsifikate erkannt und das Zugangssystem entsprechend gesteuert werden.

### Kurzbeschreibung der Zeichnung

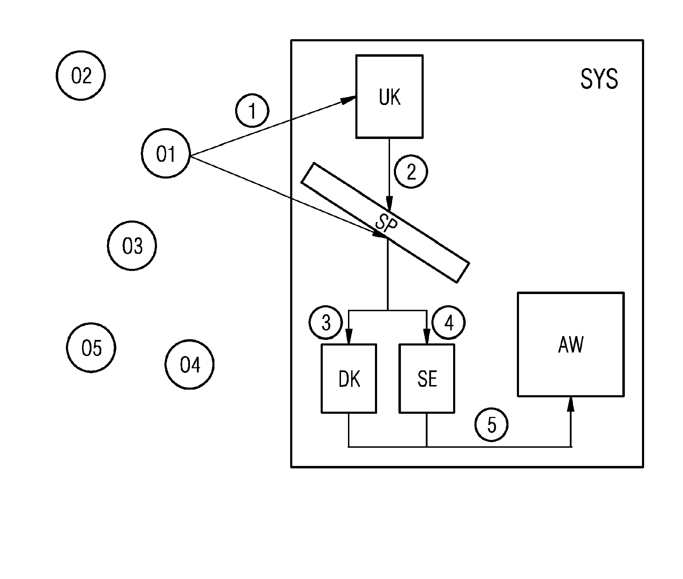

Die Erfindung wird nachfolgend in beispielhafter Weise anhand einer beigefügten Figur erläutert. Figur 1 zeigt dabei schematisch und beispielhaft den Aufbau des erfindungsgemäßen Systems zur dreidimensionalen Objektvermessung sowie den Ablauf des zugehörigen Verfahrens.

### Ausführung der Erfindung

In Figur 1 ist beispielhaft, in schematischer Weise und vereinfacht das erfindungsgemäße System SYS zur dreidimensionalen Objektvermessung dargestellt. Das erfindungsgemäße System SYS umfasst ein Überblickskamera UK, ein Spiegelelement SP sowie eine Detailkamera DK. Dabei wird von der Überblickskamera UK, dem Spiegelelement SP und der Detailkamera DK ein Aufnahmesystem zum Erfassen von Objekten 01, 02, 03, 04 wie z.B. Personen, welche schematisch dargestellt sind, gebildet. Dabei kann nach dem Detektieren eines Objektes 01 durch die Überblickskamera UK des Aufnahmesystems das Spiegelelement SP derart verstellt oder geschwenkt werden, dass über einen Spiegel des Spiegelelements SP des Aufnahmesystems von der Detailkamera DK des Aufnahmesystems ein Detailbild des detektierten Objektes 01 (z.B. das Gesicht einer detektierten Person) aufgenommen werden kann.

Weiters weist das erfindungsgemäße System SYS ein Sensorsystem SE auf, welche zur dreidimensionalen Lichtvermessung auf Basis von Lichtlaufzeiten vorgesehen ist. Über das für die Detailbildaufnahme entsprechend verstellte oder geschwenkte Spiegelelement SP des Aufnahmesystems kann dann von Sensorsystem SE zusätzlich zum Detailbild ein dreidimensionaler Abdruck des detektierten Objektes 01 selektiv - d.h. im Bereich des Detailbildes - erfasst werden.

Das System SYS zur dreidimensionalen Objektvermessung umfasst außerdem eine Auswerteeinheit AW, von welcher erfasste Daten wie z.B. Detailbilder und/oder dreidimensionale Abdrücke von Objekten 01, 02, 03, 04 beispielsweise für eine Fälschungserkennung ausgewertet werden.

Figur 1 zeigt auch schematisch und beispielhaft den Ablauf des erfindungsgemäßen Verfahrens zur dreidimensionalen Objektvermessung mit dem erfindungsgemäßen System SYS zur dreidimensionalen Objektvermessung. In einem ersten Verfahrensschritt 1 des erfindungsgemäßen Verfahrens wird von der Überblickskamera UK des Aufnahmesystems des Systems SYS ein Objekt 01 wie beispielsweise eine Person, die sich in den Aufnahmebereich der Überblickskamera UK bewegt hat, registriert und detektiert.

In einem zweiten Verfahrensschritt 2 wird daher das Spiegelelement SP des Systems SYS derart verstellt oder geschwenkt, dass ein Detailbild des Objektes 01 bzw. der Person 01 vom System SYS erfasst werden kann. Dabei wird beispielsweise der Bereich des Gesichtes der Person 01 für eine Detailaufnahme herausgezoomt. In einem dritten Verfahrensschritt 3 wird dann über einen Spiegel des Spiegelelements SP das Detailbild des Objektes 01 - beispielsweise das Gesicht der detektierten Person 01 - erfasst.

In einem vierten Verfahrensschritt 4, welcher unmittelbar nach der Aufnahme des Detailbildes oder fast parallel dazu erfolgen kann, wird dann mit dem Sensorsystem SE des Systems SYS selektiv ein dreidimensionaler Abdruck des Objektes O! über das Spiegelelement SP erfasst. Der dreidimensionale Abdruck wird dabei nur selektiv - d.h. im Bereich des Detailbildes des Objektes 01 bzw. z.B. bei einer detektierten Person 01 nur um den Bereich des Gesichtes dieser Person 01 - ermittelt. Für ein Ermitteln des dreidimensionalen Abdrucks wird dabei von Sensorsystem SE eine Lichtvermessung auf Basis von Lichtlaufzeiten eingesetzt. Dabei werden Lichtimpulse zum zu vermessenden Objekt 01 ausgesendet und Lichtlaufzeiten dieser Lichtimpulse bzw. der Reflexion der Lichtimpulse am Objekt 01 gemessen. Aus den Lichtlaufzeiten wird dann vom Sensorsystem SE für dreidimensionale Lichtvermessung ein dreidimensionaler Abdruck des selektiven Objektdetails (z.B. Gesicht) abgeleitet.

In einem fünften Verfahrensschritt 5 werden dann die von der Detailkamera DK und die vom Sensorsystem SE ermittelten Daten für das detektierte Objekt 01 bzw. für die erfasste Person 01 an die Auswerteeinheit AW des Systems SYS weitergeleitet. Die Auswerteeinheit AW erhält damit einerseits das von der Detailkamera DK erfasste Detailbild und andererseits den vom Sensorsystem SE selektiv ermittelten, dreidimensionalen Abdruck des Objektes 01. Im Zuge der Auswertung dieser Daten kann dann beispielsweise das detektierte Objekt 01 bzw. die detektierte Person 01 anhand des Detailbildes identifiziert werden. Zusätzlich kann anhand des dreidimensionalen Abdrucks des Sensorsystems eine Art Lebenderkennung durchgeführt werden, wobei durch den dreidimensionalen Abdruck eindeutig Fälschungen wie z.B. Fotos erkannt werden können. Da von Fotos keinen dreidimensionalen Abdrücke mit dem Sensorsystem SE auf Basis von Lichtlaufzeiten erfasst werden können, kann damit in kurzer Erfassungszeit ein Falsifikat erkannt und entsprechende Sicherheitsmaßnahmen eingeleitet werden.

## Patentansprüche

1. System (SYS) zur dreidimensionalen Objektvermessung, insbesondere von Gesichtern, **dadurch gekennzeichnet, dass** ein Aufnahmesystem zum Erfassen von Objekten (01, 02, 03, 04), welches zumindest eine Überblickskamera (UK), eine Detailkamera (DK) und ein verstellbares oder schwenkbares Spiegelelement (SP) umfasst, sowie ein Sensorsystem (SE) zur dreidimensionalen Lichtvermessung vorgesehen sind, wobei nach Detektieren von Objekten (01, 02, 03, 04) das Spiegelelement (SP) derart verstellt oder geschwenkt wird, dass über einen Spiegel des Spiegelelements (SP) von der Detailkamera (DK) ein Detailbild eines Objektes (01) und mit dem Sensorsystem (SE) zusätzlich selektiv ein dreidimensionaler Abdruck dieses Objektes (01) erfasst wird.

2. System (SYS) nach Anspruch 1, **dadurch gekennzeichnet, dass** das Detektieren von Objekten (01, 02, 03, 04) durch die Überblickskamera (UK) des Aufnahmesystems erfolgt und ein Verstellen oder Schwenken des Spiegelelements (SP) auslöst.

3. System (SYS) nach einem der Ansprüche 1 bis 2, **dadurch gekennzeichnet, dass** ein selektives Erfassen des dreidimensionalen Abdrucks des Objektes (01) durch das Sensorsystem (SE) zur Lichtvermessung auf Basis von Lichtlaufzeiten durchgeführt wird.

4. System (SYS) nach einem der Ansprüche 1 bis 3, **dadurch gekennzeichnet, dass** für eine Auswertung des Detailbildes und des dreidimensionalen Abdrucks des Objektes (01) eine Auswerteeinheit (AW) vorgesehen ist.

5. Verfahren zur dreidimensionalen Objektvermessung mit einem System (SYS) gemäß den Ansprüchen 1 bis 4, **dadurch gekennzeichnet, dass** von einer Überblickskamera (UK) des Aufnahmesystems Objekte (01, 02, 03, 04) registriert und detektiert werden (1), dass dann das Spiegelelement (SP) des Aufnahmesystems derart verstellt oder geschwenkt wird (2), dass selektiv ein detektiertes Objekt (01) in einem Detailbild von der Detailkamera (DK) erfasst wird (3), und dass mit dem Sensorsystem (SE) zusätzlich selektiv ein dreidimensionaler Abdruck dieses Objektes (01) aufgenommen wird (4).

6. Verfahren nach Anspruch 5, **dadurch gekennzeichnet, dass** das erfasste Detailbild und der aufgenommene dreidimensionale Abdruck des Objektes (01) an die Auswerteeinheit (AW) zur Auswertung weitergeleitet werden (5).
